Europäisches Patentamt

European Patent Office

Office européen des brevets

(11) Publication number: **0 289 779**

**A2**

## EUROPEAN PATENT APPLICATION

(21) Application number: **88105017.3**

(51) Int. Cl.⁴: **G06F 12/06**

(22) Date of filing: **28.03.88**

The title of the invention has been amended (Guidelines for Examination in the EPO, A-III, 7.3).

(30) Priority: **07.04.87 US 35685**

(43) Date of publication of application:
**09.11.88 Bulletin 88/45**

(84) Designated Contracting States:
**CH DE ES FR GB IT LI**

(71) Applicant: **Siemens Aktiengesellschaft Berlin und München**
**Wittelsbacherplatz 2**
**D-8000 München 2(DE)**

(72) Inventor: **Nilsson, Sven-Axel, Dr.**
**Bolzweg 6**
**D-8024 Deisenhofen(DE)**

(54) Process for initializing a multi-card computer system.

(57) A process for initiating a high-availability computer system with a pre-defined configuration of the modules and cards. High availability computer systems typically have multiple redundant components, for that reason each component has to be uniquely identified for data bus access. The computer system is designed such that each component or module requiring unique identification for data bus access is assigned such identification in an initializing process in which card cages, and circuit modules are assigned identification data words. Further the functions of redundant modules such as core processor - shadow processor, and MASTER processor - CHECKER processor are assigned as part of this initialization process.

FIG 1

EP 0 289 779 A2

# A PROCESS FOR INITIALIZING A HIGH-AVAILABILITY COMPUTER SYSTEM WITH A PREDEFINABLE CONFIGURATION OF THE MODULES AND CARDS

## Field of the Invention

This invention relates to electronic systems and more particularly to high-availability digital computer systems comprised of many circuit cards installed in one or more card cages and a process for initializing such systems.

## Background

In computer systems with a large number of circuit cards, many having active computing modules, it is often necessary to specially identify the cards assembled within a card cage, since for high-availability systems the same circuit card configurations are often present in different card cages. In such systems it is possible to identify the cards during the initialization phase, under software or hardware control; doing so, however, requires additional decoding modules in order to make the transmitted bus signals readable for the modules. Furthermore, manual setting is known to be possible for each card cage, for example via addressing switches, or signals obtained by interrogating a read-only memory (ROM) can also be used. All these identification processes, however, require additional manipulations or operating cycles, which lead to a substantial expenditure of time and engineering effort, generate errors, and thereby impair reliability.

## Summary of the Invention

It is the object of this invention to provide a process for initializing a high-availability computer system in which, even if a large number of cards and card cages are present, an unambiguous identification of the cards and modules is possible without incurring extra data processing or operating time.

Briefly stated in accordance with one aspect of the invention the foregoing objects are achieved by providing a method for initializing a high availability computer system with at least one power supply module, each having a respective system support module which has a respective initiate line connected thereto; at least one processor module having address lines and data lines connected to a module bus; a memory array connecting to the module through memory control units having each memory control unit controlled by the processor module which is operating as the main processor module, such as a MASTER/CHECKER connecting said at least one processor modules and said memory control unit to a system bus; a plurality of card cages, each having a backplane, interconnected by said system bus which exists in the backplane; and a plurality of cards, each having a predefined configuration of modules and each connecting to said system bus when inserted into a slot in one of said plurality of card cages. This method comprises the steps of defining within each said card cage a register within one of said bus extension units upon one of said cards for storing a predefinable card cage identification signal which is connected by interface circuitry to said system bus; generating an initiating signal, such as INIT, by means of said system support module upon a switching on of said power supply module; transmitting said initiating signal over said initiate line starting the initialization phase of said computer system; transmitting under hardware control a component identification signal over the module bus into a register associated with the module bus interface of each card cage identification storing module, and over the system bus into a register associated with the system bus interface of each card cage identification starting module subsequently transmitting and storing an updated card cage identification signal to each respective card cage identification module register associated with the module bus interface; and register of each component of each card in the respectively identified card cage.

The process in accordance with the invention is particularly advantageous because the identification is carried out during the initialization phase in parallel with the identification of the cards and modules. Even if, for example, the system bus extends over several card cages, the location of a card in the mechanical layout of the system can thus be *positively* determined, and, independent of this determination, it can be ascertained where the initializing processor or processors, as the case may be, are physically located in the system; this point is very important when an expansion is carried out, or when cards are exchanged.

## Brief Description of the Drawings:

While the specification concludes with claims particularly pointing out and distinctly claiming the subject matter which is regarded as the invention, it *is believed that* the invention will be better understood from the following description of the preferred embodiment taken in conjunction with the accompanying drawings in which:

Figure 1 is a block diagram of a representative high-availability computer system;

Figure 2 presents an example of the identification code assignment: and

Figure 3 shows a block diagram of two card cages of the computer system interconnected by one system bus.

## Description of a Preferred Embodiment

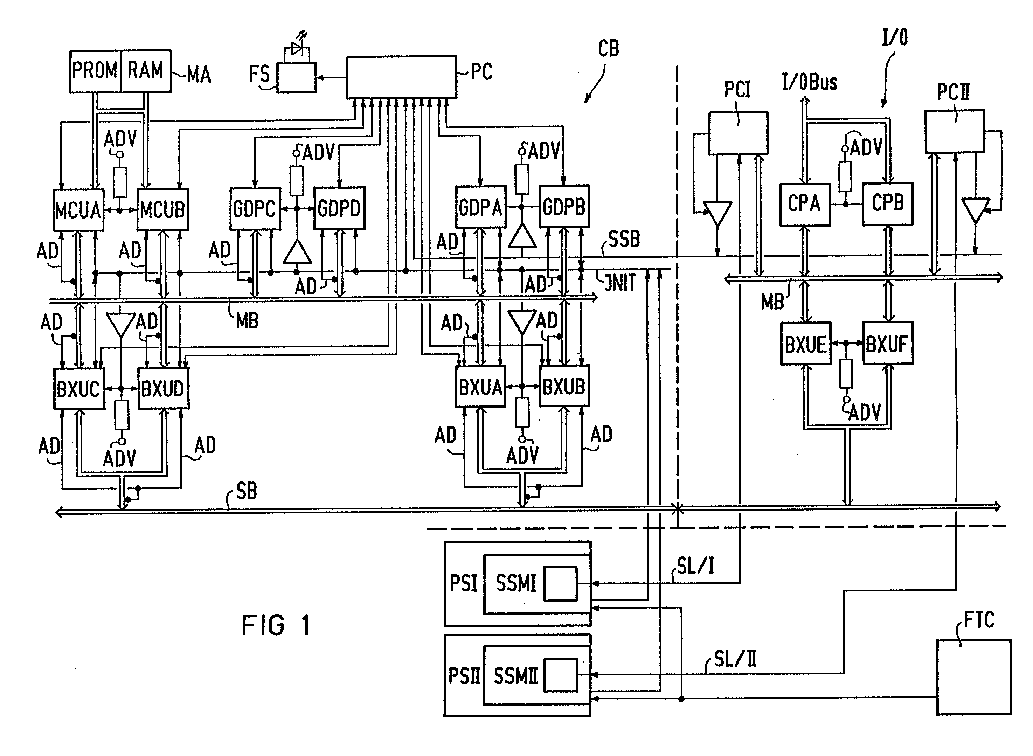

Figure 1 shows a computer system with a block diagram of a computational board CB on which there are four processor modules GDPA, GDPB, GDPC and GDPD (GDP is abreviated for a general data processor). Like most of the computer modules mentioned below, the processor modules are VLSI components. The data and address lines of the processor modules GDPA ... GDPD are connected to a common module bus MB. Each pair of processor modules GDPA and GDPB, or GDPC and GDPD form a unit, in which each of the modules, as controlled by hardware or software, is assigned either the MASTER function or the subordinate CHECKER function. In the present circuit embodiment, the processor modules GDPA and GDPB are each connected, via module bus MB, to bus extension units BXUA and BXUB, which in turn have their data and address lines connected to a system bus SB. which represents the central systems bus for all cards and modules in the computer system.

On the computational board CB there is also a memory array MA, which consists of a programmable read-only memory PROM and a read-write random access memory RAM. The read-write output and input of the memory array MA are likewise connected to the module bus MB by means of memory control units MCUA and MCUB. Each of the processor modules GDPA ... GDPD, the memory control units MCUA and MCUB, and the bus extension units BXUA and BXUB also have available a communications input COM, which in each case is connected to a pin on a parameter controller PC. An example of a device that can be used as the parameter controller is the 8051 microprocessor made by Intel Corp. or by Siemens A.G.. At further inputs of the parameter controller PC, certain word parameters of the computational board can be externally set by analog or digital setting means. Here an error-message unit FS is connected through one output of the parameter controller PC; the error-message unit sends a signal when an error occurs in the modules monitored by the parameter controller module PC.

On the computational board CB there is also an initialization signal line INIT, to which the modules GDPA through GDPD, the bus extension units BXUA through BXUD, and the memory control units MCUA and MCUB are connected.

Further shown in Figure 1 is a serial system bus SSB, by means of which the parameter controller modules PC of the several computational boards are connected to one another. A detailed functional description of the modules shown in Figure 1 follows below.

In the right-hand portion of Figure 1 there is also a block diagram of the input-output card I/O of the computer system described here. This circuit contains a pair of channel processors CPA and CPB, one as a MASTER and the other as a CHEKCER, to the outputs of which the only input-output bus i.e., I/O bus, of the computer system is connected. The channel processors CPA and CPB are each connected, by means of bus extension units BXUE and BXUF respectively, to a module bus MB, which is structured similarly to the previously mentioned computational board module bus as shown in Fig. 1. The bus extension units BXUE and BXUF are in turn connected to the system bus SB that is common to the entire computer system. Also present on the input-output card I/O are parameter controllers PC/I and PC/II, which are likewise connected to the module bus MB present here and which are each further connected, by means of

3

coupling modules K/I and K/II, to the above-mentioned serial system bus SSB. Through an additional serial line interconnection, SL/I and SL/II respectively, each of the parameter controllers PC/I and PC/II is connected to a power supply module described in more detail immediately below.

The bottom portion of Figure 1 shows an overall arrangement of two power supply modules PS/I and PS/II, which are identical to each other. In addition to the power supply connections not shown here, the power supply modules PS/I and PS/II have two system support modules SSM/I and SSM/II, each of which is provided with a microprocessor (e.g., an Intel 8051). These microprocessors are each connected, through their respective serial connection line SL/I or SL/II, to a respective parameter controller PC/I or PC/II on the input-output card. Further outputs of the system support modules SSM/I and SSM/II are the initialization lines INIT/I and INIT/II, which control the startup phase of the computer system and with which the INIT lines described above are coupled.

Initialization is an essential process required by the startup or restart of the entire computer system after an alteration of the system configuration. It is necessary after a configuration change to subsequently identify and parametrize all VLSI components and the other physical and logical components of the system.

Immediately after the system has been turned on, i.e. a cold startup; or a partial restart of the system, i.e., a warm startup, all components are initialized as predefined by software or hardware during an INIT signal sent directly over the INIT line by the system support modules SSM or sent over the system bus. An identification phase or cycle follows, during which the identity of the VLSI components is established. Next, in the parameterization phase, parameters are loaded into the appropriate registers of the VLSI components, preferably through the parameter controller PC; said parameters depend on the configuration of the system and on several controllable factors and may deviate from the predefined values in the first phase of initialization. The two phases are executed primarily through the COM pins of the VLSI components. These registers in the components are loaded serially.

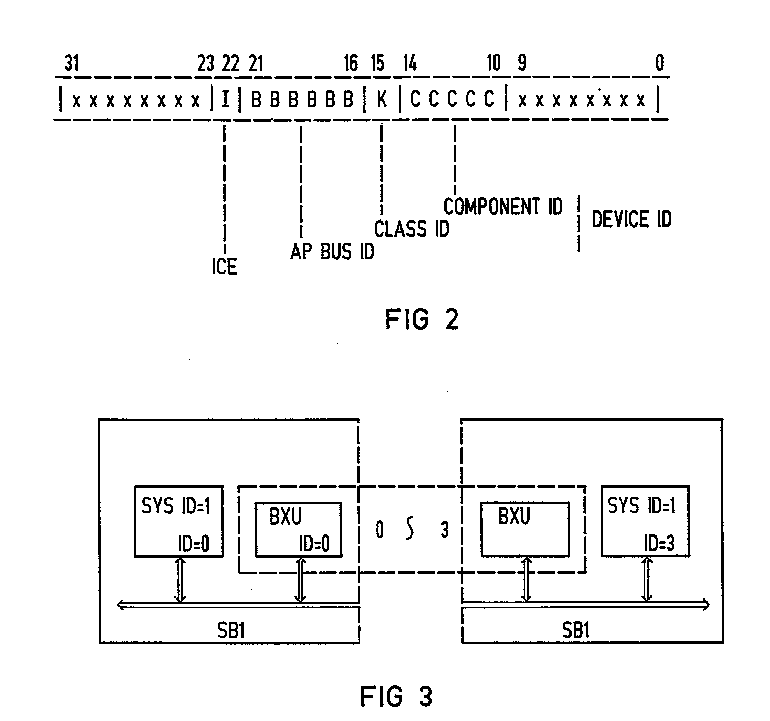

Figure 2 shows an example of an identification code such as can be read serially into the registers of the VLSI components by means of an identify device command. The bits in positions 10 through 22 have particular significance in this case.

Positions 10 through 14 are reserved for component identification, CID; the corresponding register positions display the values 00000 as default readings. When the configuration is altered, the CID code can be altered by overwriting the register.

In class identification (Position 15), two classes of VLSI components are distinguished (memory components = 0, non-memory components = 1). The ICE (in circuit emulation) bit (position 22) serves to distinguish components that, during a test phase, are VLSI components to be tested (ICE bit = 0) or are VLSI components available for emulation purposes (ICE bit = 1).

Positions 16 to 21 identify the system bus SB or the module bus MB to which the VLSI components are connected. The register positions exhibit 000000 as default values and are specified or overwritten by a bus identification command, BID. The appropriate identification bits are assigned under software control and take into account, among other things, the identity of the subsystem or of the card cage or module to which the VLSI components are connected by means of the card.

The physical identification mechanism with the corresponding commands is controlled by means of a microcode implemented in the processor modules. In order to identify the applicable component identification input, each VLSI component exhibits an INITID input, each of which is connected to one line of the 32-bit-wide module bus MB or system bus SB. Thus a maximum of 32 components can be addressed. The commands are sent by whichever one of the processor modules GDPA or GDPB was defined as the core processor in the predefinition phase.

Every identification command contains, as its first data word, a data field of 32 bits, i.e., 4 bytes, with only one logic 1 in the field; the position of the logic 1 advances from the least significant to the most significant bit as shown below for the initial component identification numbers 0 through 31.

```
00000000   00000000   00000000   00000001   =   CID   0

00000000   00000000   00000000   00000010   =   CID   1

00000000   00000000   00000000   00000100   =   CID   2

. . . . . . . .   . . . . . . . .   . . . . . . . .   . . . . . . . .   .   . . .   .

. . . . . . . .   . . . . . . . .   . . . . . . . .   . . . . . . . .   .   . . .   . .

. . . . . . . .   . . . . . . . .   . . . . . . . .   . . . . . . . .   .   . . .   . .

10000000   00000000   00000000   00000000   =   CID  31
```

When a VLSI component sees a logic 1, and thus the identification command, at its INITID input, the following component identification signal CID, which is the second data word on the bus, is subsequently read as the currently applicable CID code and stored in the appropriate register positions as shown in Figure 2.

## Example:

```
Data word 1   00000000   00000000   00000000   00000100

Data word 2   xxxCCCCC   xxBBBBBB   xCCCCxx   xxxCCCCC
```

Here the fields with C's contain the component identification, and the fields with B's contain the bus identification BID.

In accordance with the identification procedure just described, the bus extension units BXUA through BXUD, are also labeled as VLSI components. Thus a local identification including CID and BID information is carried out by means of the local module bus MB. The sequence of identification commands is transmitted through the bus extension unit BXU to the system bus side of the bus extension unit BXU. This transmission also takes place in the reverse direction when a correction is made to the identification. In case a number of cards can be inserted in card cages of the system, but said card cages exhibit a common system bus SB, the card cage or card must be specially identified. A pertinent block diagram of such a system is shown in Figure 3.

A unique bus identification BID is guaranteed for a system with one card cage. If there are several card cages, however, a system identification SYSID must be distinguished from a card-cage identification CAGEID. An expanded system having one or more expansion card cages is accomplished by having each card cage connected through a bus extension unit BXU to the system bus SB. In the example illustrated in Figure 3, the left-hand portion of the system has the identification: CAGEID = 0, and the right-hand portion of the system has the identification: CAGEID = 3. In the left-hand portion, the assigned identification 0 has been retained; in the right-hand portion, the assigned identification 0 at the bus extension unit BXU has first been changed to the correct identification 3 during the initialization process. The system identification in both portions is SYSID = 1.

The identification of the bus extension unit at the system bus interface side is also present, as was mentioned above, on the module bus interface side within the component identification, CID. It is now checked whether an identification deviates from the identification of the other bus extension units in the system. Since this is the case in the representative embodiment, a correction of the identification CAGEID is performed on the corresponding card cage. This correction is made by reading the register entry under the control of the core processor module and reading that register entry into all VLSI components on the module bus interface side as the new CAGEID.

In the example illustrated in Figure 1, the two processor modules GDPA and GDPB operate as core processors, since they are instructed by the application of a d.c. signal, Vcc, through the respective pins MDCHK to operate as the core processors. Modules not operating as core processors have their MDCHK pins grounded. The further processor modules GDPC and GDPD are present for redundancy or shadow purposes to achieve high availability, and as such these are non-core processors; said condition is established by sending a HIGH or LOW signal to an appropriate pin ADV under hardware control. A different configuration is also possible. The processor modules GDPA and GDPB are a MASTER/CHECKER pair which starts and controls the initialization phase. The memory control units MCUA and MCUB are directly assigned to the processor modules GDPA and GDPB by means of a respective component identification: CID = 4. The data traffic with the system bus SB and thus to other portions of the computer system, for example to the input-output card I/O, is handled by the bus extension units BXUA and BXUB or BXUC and BXUD.

The processor module GDPA has its INITID pin connected to the line AD4 of the module bus MB and here receives its component identification CID. The MASTER function is assigned to it, because the signal applied to its COM pin is logic 1 HIGH.

The processor module GDPB likewise has its INITID pin connected to the line AD4 for identification (CID = 4); it, however, is defined as CHECKER during the INIT phase by a logic 1 or low signal applied to its COM pin.

In the same manner, the memory control unit MCUA is defined as a MASTER and the memory control unit MCUB is defined as a CHECKER. The processor modules GDPC and GDPD are connected to the line AD3 and take only a passive part in the system identification; here too, however, the MASTER/CHECKER distinction is made.

In the case of the bus extension units, MASTER/CHECKER operations are assigned in accordance with the processor modules or memory control units connected to each.

In a further identification phase, the bus extension units read, on the system bus side at their INITID pins, the identifications of the system or the module number, which are first entered into the appropriate register positions. With this entry, any appropriate predefinitions of the further VLSI components connected to the module bus are corrected and adapted to the actual configuration of the system.

It will now be understood that there has been disclosed an improved system for unambiguously identifying each card and each functional module in a large, multi-card, high-availability computer system. As will be evident from the foregoing description, certain aspects of the invention are not limited to the particular details of the examples illustrated, and it is therefore contemplated that other modifications or applications will occur to those skilled in the art. It is accordingly intended that the claims shall cover all such modifications and applications as do not depart from the true spirit and script of the invention.

## Claims

1. A process for initializing a high availability computer system with at least one power supply module, each having a respective system support module which has a respective initiate line connected thereto; at least one processor module having address lines and data lines connected to a module bus; a memory array connecting to the processor module through memory control units having each memory control unit controlled by the processor module which is operating as the core processor module, such as a MASTER/CHECKER pair, processor module; a plurality of bus extension units connecting said at least one processor modules and said memory control units to a system bus; a plurality of card cages, each having a backplane, interconnected by said system bus with each backplane; and a plurality of cards, each having a predefined configuration of modules and each connecting to said system bus when inserted into a slot in one of said plurality of card cages; said process comprising the steps of:

defining within each said card cage a register within one of said bus extension units upon one of said cards for storing a predefinable card cage identification signal which is connected by interface circuitry to said system bus;

generating an initiating signal, such as INTT, by means of said system support module upon a switching-on of said power supply module;

transmitting said initiating signal over said initiate line starting the initialization phase of said computer system;

transmitting a component identification signal under hardware control over the module bus into a register associated with the module bus interface of each card cage identification storing module, and over the system bus into a register associated with the system bus interface of each card cage identification storing module;

subsequently transmitting and storing an updated card cage identification signal to each respective card cage identification module register associated with the module bus interface; and

transmitting the card cage identification signal into a register of each component of each card in the respectively identified card cage.

2. A process for initializing a high-availability computer system according to claim 1 further comprising the step of: processing each said updated card cage identification signal to a respective register associated with the system bus interface to generate a bus identification signal for each module on the system bus.

FIG 1

0 289 779

87 P 7414 E

87 P 7414 E

```
  31              23 22 21        16 15  14       10 9              0
 | x x x x x x x x | I | B B B B B B | K | C C C C C | x x x x x x x x |
```

ICE

AP BUS ID

CLASS ID

COMPONENT ID

DEVICE ID

FIG 2

FIG 3